# EUROPEAN PATENT SPECIFICATION

(11) **EP 4 504 568 B1**
(45) Date of publication and mention of the grant of the patent: **29.04.2026**
(21) Application number: 22721373.3
(22) Date of filing: 08.04.2022
(51) Int. Cl.: B60S 1/48, B60S 1/50, B60S 1/56

(54) **SYSTEM AND METHOD FOR FLUID DISPERSION**
SYSTEM UND VERFAHREN ZUR FLUIDDISPERSION
SYSTÈME ET PROCÉDÉ DE DISPERSION DE FLUIDE

(43) Date of publication of application: 12.02.2025
(73) Proprietor: Volvo Autonomous Solutions AB, 405 08 Göteborg (SE)
(72) Inventor: HANSON, Benjamin, Fayetteville, Pennsylvania 17222 (US)
(74) Representative: Zacco Sweden AB
(86) International application number: PCT/EP2022/059404
(87) International publication number: WO 2023/193926

(56) References cited:
- EP-B1- 3 615 391
- DE-A1- 102019 125 970
- US-A1- 2020 180 567
- US-A1- 2021 309 186
- US-A1- 2021 402 961

## Description

### TECHNICAL FIELD

The present invention relates to a system and method for fluid dispersion at a vehicle, and preferably for an autonomous vehicle having a plurality of sensors, where at least some of the sensors are provided with a fluid nozzle. The system and method will reduce the amount of components used in such a system.

### BACKGROUND ART

Vehicles are being provided with more and more sensors arranged to detect objects in the close vicinity of the vehicle. Some sensors are arranged to increase the safety of the vehicle, e.g. to measure the distance to a vehicle in front of the ego vehicle, or to detect if the vehicle is approaching the side lines of a lane. Other sensors are used to give a detailed view of the surrounding of the vehicle, in order to provide the vehicle with some type of autonomy, such that the vehicle will be able to drive autonomously at at least some parts of a road.

Some of these sensors, e.g. cameras, depend on a clear view to be able to give a clear signal that is useful to the control system. In order to provide a reliable function, the sensors must thus not be contaminated or dirty. The vehicle is for this reason provided with a cleaning system arranged to clean the sensors when required. Most often, a cleaning fluid such as water or a windscreen washer fluid is used to clean the sensors, where a nozzle is arranged close to the sensor. A pressurized fluid is sprayed on the sensor at a high pressure such that the contamination or dirt is removed from the sensor, similar to a headlamp cleaning system of the vehicle.

In order to reduce the amount of components and the cost of the system, each sensor nozzle is not provided with its own pressure pump. Instead, each sensor nozzle is provided with a controllable valve that can be opened when fluid is to be sprayed on the sensor. The fluid to a nozzle is provided from a pressurized accumulator tank, which will provide fluid with a sufficient high pressure. A vehicle is provided with at least one pressurized accumulator tank, and could be provided with more than one pressurized accumulator tank, depending on e.g. the layout of the cleaning system. The pressurized fluid to the pressurized accumulator tank is provided with a pressure pump that is connected to a fluid reservoir, e.g. the existing container holding the windscreen washer fluid of the vehicle. The windscreen washer fluid to the windscreen nozzles is provided with a dedicated windscreen pump arranged in or close to the fluid reservoir.

The problem of cleaning additional sensors is well known.

EP 3615391 B1 discloses a cleaning system comprising a pressure reservoir, where all fluid nozzles of the vehicle are supplied with pressurized fluid from the pressure reservoir through separate controllable valves. The pressurized fluid is fed to the pressure reservoir by a high-pressure pump.

US 2020/0180567 A1 discloses a cleaning system where a pump feeds pressurized fluid to a plurality of nozzles, and where each nozzle is provided with a controllable valve that is opened when a nozzle needs fluid.

These systems work fine, but there is still room for an improved cleaning system for a vehicle.

### DISCLOSURE OF INVENTION

An object of the invention is therefore to provide a fluid dispersion system for a vehicle. A further object of the invention is to provide a method for dispersing a fluid on a vehicle. A further object of the invention is to provide a vehicle comprising such a system. An object is also to provide a computer program and a computer program product adapted to perform the steps of the method.

The solution to the problem according to the invention is described in the characterizing part of claim 1 regarding the system, in claim 8 regarding the method and in claim 7 regarding the vehicle. The other claims contain advantageous further developments of the inventive system and method. Claims for a computer program and a computer program product are also enclosed.

In the inventive fluid dispersion system for a vehicle, adapted to feed fluid to a plurality of fluid nozzles, comprising a fluid reservoir arranged to hold the fluid, a pressure accumulator tank arranged to hold pressurized fluid, a pump arranged to supply the pressure accumulator tank with pressurized fluid, a first type of fluid nozzle provided with a controllable valve connected to the pressure accumulator tank and an electronic control unit arranged to control the pump and the controllable valve, the object of the invention is achieved in that the pump further comprises a controllable backflow valve connected to a windscreen washer nozzle, where the backflow valve is closed as default, and where the electronic control unit is arranged to open the backflow valve of the pump in dependency of an open signal.

With the inventive system, a cleaning system for a vehicle is provided. The vehicle may be an autonomous vehicle having a level of driving automation of e.g. level 2, 3 or 4. The higher level of automation, the more sensors will be used on the vehicle. In the system, the windscreen nozzle is supplied with fluid from a pressurized accumulator tank through a controllable backflow valve in the pump, and the sensor nozzles are supplied with fluid from the pressurized accumulator tank through controllable valves connected to the sensor nozzles. In this way, there is no need for a separate controllable valve for the windscreen nozzle, which simplifies the system. The headlights may in one example also be supplied with fluid from the backflow valve, i.e. the headlamp nozzles may be connected in parallel to the windscreen nozzle.

The pump is connected to a fluid supply reservoir, e.g. a windscreen washer tank, where the cleaning fluid is stored. The fluid reservoir is normally vented, having an ambient pressure. The pump is preferably a high pressure pump, supplying a pressure of between 5-10 bars and a fluid flow of at least 2 litres/min. The pump will supply pressurized fluid to the pressurized accumulator tank. Each sensor nozzle is connected to the pressurized accumulator tank. In this way, each sensor nozzle must not be supplied by a separate pump. Each nozzle or nozzle group is provided with a controllable valve that will open when the nozzle is to spray a cleaning fluid on the sensor. The controllable valve is preferably arranged close to the pressurized accumulator tank. This will reduce the idle pressure in the pressure lines connecting the pressurized accumulator tank to the nozzles.

A pressure sensor arranged at the pump outlet or in the pressurized accumulator tank will monitor the pressure in the pressurized accumulator tank, and will start the pump when the pressure is below a predefined value. In this way, the pressurized accumulator tank will always be able to deliver pressurized fluid to the sensor nozzles and to the windscreen nozzle.

The windscreen nozzle is connected to a controllable backflow valve that is installed in the pump or in the supply line to the pump. The backflow valve is arranged as an overpressure valve that will open at a predefined pressure in order to protect the pressurized accumulator tank from an excessive pressure. The backflow valve can also be controlled by an electronic control unit to open at other pressure values. The backflow valve is used to supply the windscreen nozzles with cleaning fluid. When the driver wants to clean the windscreen, he pushes the washer button and the ECU will open the backflow valve such that cleaning fluid is supplied to the windscreen nozzles. By using an existing controllable backflow valve, the system is simplified.

The fluid reservoir may also be an airtight container which is pressurized by an external pressure source, e.g. from a compressor of the vehicle. In this way, the fluid reservoir may be pressurized at a low pressure, e.g. 2 bars, such that the pump must only rise the pressure level to a lesser degree.

In a method for dispersing a pressurized fluid to a first fluid nozzle type and a second fluid nozzle type on a vehicle, where the first type of fluid nozzle is connected to a pressure accumulator tank through a controllable valve, and where the second type of fluid nozzle is connected to the pressure accumulator tank through a controllable backflow valve in a pump, the steps of; supplying pressurized fluid to the pressure accumulator tank from a fluid reservoir with the pump; opening a controllable valve to supply pressurized fluid to the first type of fluid nozzle when a first signal is issued; and opening the backflow valve of the pump to supply pressurized fluid to the second type of fluid nozzle when a second signal is issued are comprised.

By this first embodiment of the method, the method allows the cleaning of various sensors without the need for a plurality of pressure pumps. By using an existing controllable backflow valve of the pressure pump, a simplified cleaning system is obtained.

### BRIEF DESCRIPTION OF DRAWINGS

The invention will be described in greater detail in the following, with reference to the attached drawings, in which
- Fig. 1: shows a schematic example of a vehicle provided with a fluid dispersion system,
- Fig. 2: shows a schematic example of a fluid dispersion system, and
- Fig. 3: shows a schematic flow chart of the inventive method.

### MODES FOR CARRYING OUT THE INVENTION

The embodiments of the invention with further developments described in the following are to be regarded only as examples and are in no way to limit the scope of the protection provided by the patent claims.

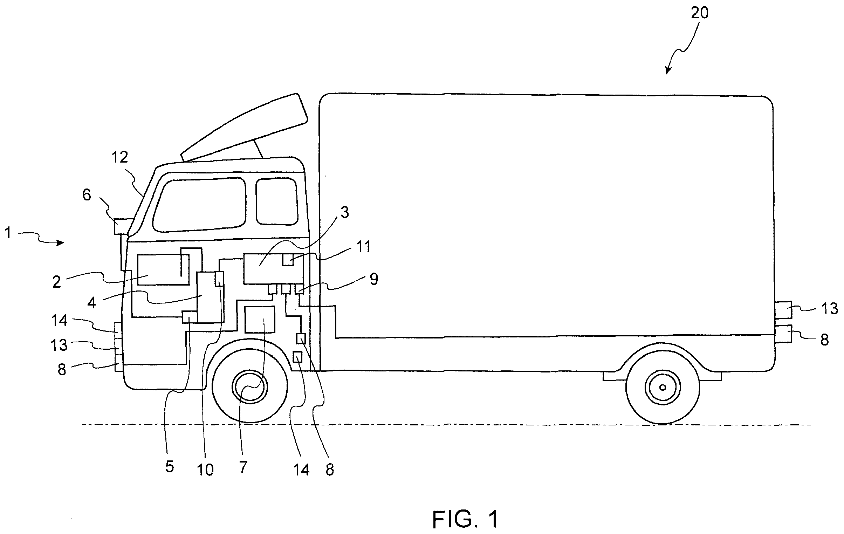

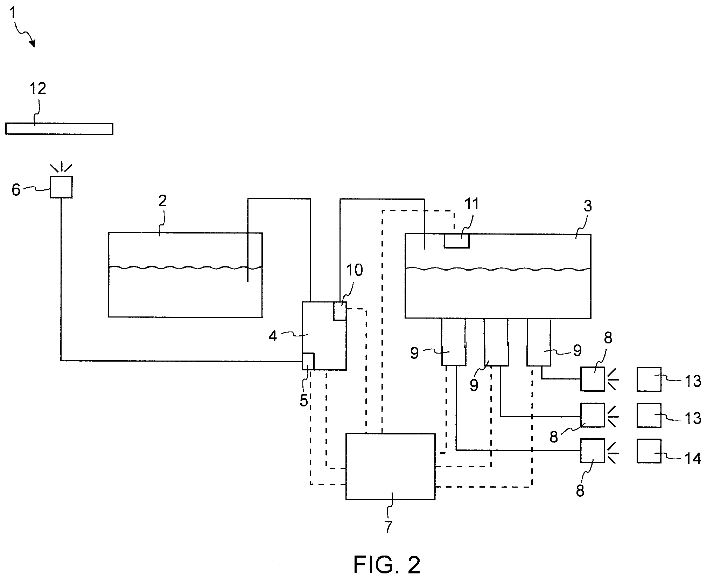

Fig. 1 shows a schematic vehicle 20 provided with an inventive system 1, and Fig. 2 shows an inventive system for fluid dispersion for a vehicle where the system is adapted to supply a plurality of nozzles with pressurized cleaning fluid. In this way, the windshield can be cleaned as usual, and the windshield pressure pump can be used to pressurize an accumulator tank arranged to supply sensor nozzles with pressurized fluid. Controllable valves are controlled by an electronic control unit (ECU) such that selected sensors can be cleaned when required.

The system 1 comprises a fluid reservoir 2 arranged to hold the cleaning fluid and is preferably the ordinary windshield washer reservoir. The reservoir may e.g. hold 4 to 10 litres of cleaning fluid or more. The fluid reservoir is in one example vented, i.e. having an ambient pressure. The system further comprises a pressure accumulator tank 3 arranged to hold pressurized fluid. The pressurized fluid is supplied from the fluid reservoir by a pressure pump 4, e.g. a conventional windshield washer pump. The pressure pump is selected such that the pressure and the capacity fulfils the need of the vehicle.

Normally, the windscreen pump is controlled to supply pressurized cleaning fluid when a wiper washer stalk is operated by a driver. Here, the pump is controlled by the ECU to supply pressurized fluid to the pressurized accumulator tank 3. The pressure in the pressurized accumulator tank is held at a predefined pressure range, e.g. between 6 to 8 bars. A pressure sensor is used to measure the pressure in the pressurized accumulator tank 3. The pressure sensor may be a pressure sensor 10 arranged in the pump, measuring the outlet pressure of the pump. The pressure sensor may also be a pressure sensor 11 arranged in the pressurized accumulator tank, measuring the pressure in the tank.

The pressure pump 4 is provided with a controllable backflow valve 5. The backflow valve is arranged to open at a predefined high pressure in order to protect the cleaning system from excessive pressure. The predefined pressure is higher than the desired working pressure of the system, and may e.g. be set to 10 or 12 bars. The backflow valve is also controllable by the ECU such that pressure can be released from the system if required for other reasons or at other pressure levels. Here, the controllable backflow valve is also used to supply cleaning fluid to the windscreen washer nozzle.

The system comprises a first type of nozzles 8 arranged to clean different sensors of the vehicle. The sensors may include a radar sensor, a camera 13, a laser sensor 14, an infrared sensor, an ultrasonic sensor or any other sensor where the signal is impaired by an unclean sensor surface. The cleaning interval of a sensor may be determined e.g. by estimations on the input signal or by input from other sensors, e.g. from a rain sensor. It is also possible to clean the sensors at given time intervals or e.g. when the windscreen wiper is used.

The first type of nozzles 8 are connected to the pressurized accumulator tank through controllable valves 9. The controllable valves are preferably arranged close to the pressurized accumulator tank 3. In this way, the pressure lines between the controllable valves and the nozzles will not be exposed to a constant high pressure, which will reduce the risk of leakage and will simplify the system. Several nozzles may be supplied with cleaning fluid through the same controllable valve.

The system also comprises a second type of nozzle, which is the windscreen washer nozzle or nozzles 6, and which is connected to the backflow valve 5 of the pump. By opening the backflow valve, fluid is allowed to flow from the pressurized accumulator tank through the pump and the backflow valve to the windscreen nozzle 6 that will spray cleaning fluid on the windscreen 12. It is also possible to connect the headlight nozzles in parallel with the windscreen nozzle. The backflow valve is closed as default, and can be opened by a signal from the wiper washer stalk when operated by a driver, which sends a signal to the ECU that opens the backflow valve.

In an example, the fluid reservoir may also be an airtight container which is pressurized by an external pressure source, e.g. from a compressor of the vehicle. In this way, the fluid reservoir may be pressurized at a low pressure, e.g. 2 to 4 bars. In this way, the engagement time of the pump may be reduced. The external pressure may e.g. be supplied by an existing compressor of the vehicle.

In order to balance the system, such that the required pressure and fluid volume is used for each nozzle and thus for cleaning each sensor, some pressure lines may be provided with restriction means that will reduce the pressure and/or volume of that pressure line. In this way, the same pressurized accumulator tank can be used for different types of nozzles and sensors.

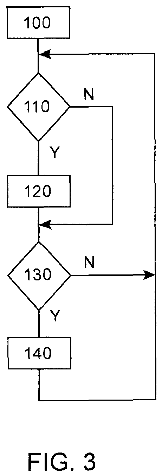

Fig. 3 shows a schematic flow chart of one example of the method for dispersing a pressurized fluid to a first fluid nozzle type and a second fluid nozzle type on a vehicle. The first type of fluid nozzle, here a sensor nozzle, is connected to a pressure accumulator tank through a controllable valve. The second type of fluid nozzle, here a windscreen washer nozzle, is connected to the pressure accumulator tank through a controllable backflow valve in a pump.

In step 100, a pressurized fluid is supplied to the pressure accumulator tank from a fluid reservoir with the pressure pump.

In step 110, it is determined if a first signal is issued, where the first signal is a signal that will open a controllable valve to supply pressurized fluid to the first type of fluid nozzle from the pressurized accumulator tank. If a first signal is issued, the controllable valve is opened in step 120. If a first signal is not issued, the method continues with step 130. The first signal may be issued by an autonomous control system of the vehicle, e.g. in dependency of a climate input or environmental input, such as temperature, humidity etc.

In step 130, it is determined if a second signal is issued, where the second signal is a signal that will open a controllable backflow valve of the pump to supply pressurized fluid to the second type of fluid nozzle from the pressurized accumulator tank. If a second signal is issued, the controllable backflow valve is opened in step 140. If a second signal is not issued, the method returns to step 110 and the method steps are repeated. The second signal may be issued by a driver of the vehicle when a windscreen wiper stalk is operated.

The invention is not to be regarded as being limited to the embodiments described above, a number of additional variants and modifications being possible within the scope of the subsequent patent claims.

### REFERENCE SIGNS

- 1:: Fluid dispersion system
- 2:: Fluid reservoir
- 3:: Pressure accumulator tank
- 4:: Pump
- 5:: Controllable backflow valve
- 6:: Windscreen washer nozzle
- 7:: Electronic control unit
- 8:: Fluid nozzle
- 9:: Controllable valve
- 10:: Pump pressure sensor
- 11:: Tank pressure sensor
- 12:: Windscreen
- 13:: Camera
- 14:: Lidar

- 20:: Vehicle

## Claims

1. Fluid dispersion system (1) for a vehicle, adapted to feed fluid to a plurality of fluid nozzles (6, 8), comprising a fluid reservoir (2) arranged to hold the fluid, a pressure accumulator tank (3) arranged to hold pressurized fluid, a pump (4) arranged to supply the pressure accumulator tank (3) with pressurized fluid, a first type of fluid nozzle (8) provided with a controllable valve (9) connected to the pressure accumulator tank (3), and an electronic control unit (7) arranged to control the pump (4) and the controllable valve (9), c h a r a c t e r i z e d i n that the pump (4) further comprises a controllable backflow valve (5) connected to a windscreen washer nozzle (6), where the backflow valve (5) is closed as default, and where the electronic control unit (7) is arranged to open the backflow valve (5) of the pump (4) in dependency of an open signal.

2. System according to claim 1, wherein a fluid nozzle (8) is provided with a fluid restrictor arranged to limit the fluid flow through the nozzle (8).

3. System according to claim 1 or 2, wherein the fluid reservoir (2) is a vented reservoir having an ambient pressure.

4. System according to claim 1 or 2, wherein the fluid reservoir (2) is an airtight reservoir arranged to be pressurized from an external pressure source.

5. System according to any of claims 1 to 4, wherein the pump (4) is provided with a pressure sensor (10) at the outlet of the pump (4).

6. System according to any of claims 1 to 4, wherein the pressure accumulator tank (3) is provided with an internal pressure sensor (11).

7. Vehicle (20), comprising a system according to any of claims 1 to 6.

8. Method for dispersing a pressurized fluid to a first fluid nozzle type and a second fluid nozzle type on a vehicle, where the first type of fluid nozzle is connected to a pressure accumulator tank through a controllable valve, and where the second type of fluid nozzle is connected to the pressure accumulator tank through a controllable backflow valve in a pump, comprising the following steps:
- supplying pressurized fluid to the pressure accumulator tank from a fluid reservoir with the pump,
- opening a controllable valve to supply pressurized fluid to the first type of fluid nozzle when a first signal is issued, and
- opening the backflow valve of the pump to supply pressurized fluid to the second type of fluid nozzle when a second signal is issued.

9. Method according to claim 8, wherein the first type of fluid nozzle is a spray nozzle for a sensor.

10. Method according to claim 9, wherein a sensor is a radar sensor, a camera, a laser sensor, an infrared sensor or an ultrasonic sensor.

11. Method according to any of claims 8 to 10, wherein the second type of fluid nozzle is a windscreen washer nozzle.

12. Method according to any of claims 8 to 11, wherein the first signal is issued by an autonomous control system of the vehicle.

13. Method according to any of claims 8 to 12, wherein the second signal is issued by a driver of the vehicle.

14. A computer program comprising program code means for performing all the steps of claims 8 - 13 when said program is run on a computer.

15. A computer program product comprising program code means stored on a computer readable medium for performing all the steps of claims 8 - 13 when said program product is run on a computer.

## Patentansprüche

1. Fluidverteilungssystem (1) für ein Fahrzeug, das zur Zuführung von Fluid zu einer Mehrzahl von Fluiddüsen (6, 8) ausgelegt ist, umfassend ein Fluidreservoir (2), das zur Aufnahme des Fluids eingerichtet ist, einen Druckspeicherbehälter (3), der zur Aufnahme von unter Druck stehendem Fluid eingerichtet ist, eine Pumpe (4), die dazu eingerichtet ist, den Druckspeicherbehälter (3) mit unter Druck stehendem Fluid zu versorgen, eine erste Art von Fluiddüse (8), die mit einem steuerbaren Ventil (9) versehen ist, das mit dem Druckspeicherbehälter (3) verbunden ist, und eine elektronische Steuereinheit (7), die dazu eingerichtet ist, die Pumpe (4) und das steuerbare Ventil (9) zu steuern, **dadurch gekennzeichnet, dass** die Pumpe (4) ferner ein steuerbares Rückflussventil (5) umfasst, das mit einer Frontscheibenwaschdüse (6) verbunden ist, wobei das Rückflussventil (5) standardmäßig geschlossen ist und wobei die elektronische Steuereinheit (7) dazu eingerichtet ist, das Rückflussventil (5) der Pumpe (4) in Abhängigkeit von einem Öffnungssignal zu öffnen.

2. System nach Anspruch 1, wobei eine Fluiddüse (8) mit einer Fluidbegrenzung versehen ist, die dazu eingerichtet ist, den Fluiddurchfluss durch die Düse (8) zu begrenzen.

3. System nach Anspruch 1 oder 2, wobei das Fluidreservoir (2) ein belüftetes Reservoir ist, das Umgebungsdruck aufweist.

4. System nach Anspruch 1 oder 2, wobei das Fluidreservoir (2) ein luftdichtes Reservoir ist, das dazu eingerichtet ist, durch eine externe Druckquelle unter Druck gesetzt zu werden.

5. System nach einem der Ansprüche 1 bis 4, wobei die Pumpe (4) am Ausgang der Pumpe (4) mit einem Drucksensor (10) versehen ist.

6. System nach einem der Ansprüche 1 bis 4, wobei der Druckspeicherbehälter (3) mit einem internen Drucksensor (11) versehen ist.

7. Fahrzeug (20), umfassend ein System nach einem der Ansprüche 1 bis 6.

8. Verfahren zum Verteilen eines unter Druck stehenden Fluids zu einer ersten Art von Fluiddüse und einer zweiten Art von Fluiddüse an einem Fahrzeug, wobei die erste Art von Fluiddüse über ein steuerbares Ventil mit einem Druckspeicherbehälter verbunden ist und wobei die zweite Art von Fluiddüse über ein steuerbares Rückflussventil in einer Pumpe mit dem Druckspeicherbehälter verbunden ist, umfassend die folgenden Schritte:
- Zuführen von unter Druck stehendem Fluid aus einem Fluidreservoir in den Druckspeicherbehälter mittels der Pumpe,
- Öffnen eines steuerbaren Ventils zur Zuführung von unter Druck stehendem Fluid zur ersten Art von Fluiddüse, wenn ein erstes Signal ausgegeben wird, und
- Öffnen des Rückflussventils der Pumpe zur Zuführung von unter Druck stehendem Fluid zur zweiten Art von Fluiddüse, wenn ein zweites Signal ausgegeben wird.

9. Verfahren nach Anspruch 8, wobei die erste Art von Fluiddüse eine Sprühdüse für einen Sensor ist.

10. Verfahren nach Anspruch 9, wobei der Sensor ein Radarsensor, eine Kamera, ein Lasersensor, ein Infrarotsensor oder ein Ultraschallsensor ist.

11. Verfahren nach einem der Ansprüche 8 bis 10, wobei die zweite Art von Fluiddüse eine Frontscheibenwaschdüse ist.

12. Verfahren nach einem der Ansprüche 8 bis 11, wobei das erste Signal von einem autonomen Steuerungssystem des Fahrzeugs ausgegeben wird.

13. Verfahren nach einem der Ansprüche 8 bis 12, wobei das zweite Signal von einem Fahrer des Fahrzeugs ausgegeben wird.

14. Computerprogramm, das Programmcodemittel umfasst, um alle Schritte der Ansprüche 8 bis 13 durchzuführen, wenn das Programm auf einem Computer ausgeführt wird.

15. Computerprogrammprodukt, das Programmcodemittel umfasst, das auf einem computerlesbaren Medium gespeichert ist, um alle Schritte der Ansprüche 8 bis 13 durchzuführen, wenn das Programmprodukt auf einem Computer ausgeführt wird.

## Revendications

1. Système de dispersion de fluide (1) pour un véhicule, adapté pour amener du fluide à une pluralité de buses de fluide (6, 8), comprenant un réservoir de fluide (2) agencé pour contenir le fluide, un réservoir accumulateur de pression (3) agencé pour contenir du fluide sous pression, une pompe (4) agencée pour alimenter le réservoir accumulateur de pression (3) en fluide sous pression, un premier type de buse de fluide (8) muni d'une soupape commandable (9) reliée au réservoir accumulateur de pression (3), et une unité de commande électronique (7) agencée pour commander la pompe (4) et la soupape commandable (9), **caractérisé en ce que** la pompe (4) comprend en outre une soupape de reflux commandable (5) reliée à une buse de lave-glace (6), où la soupape de reflux (5) est fermée par défaut, et où l'unité de commande électronique (7) est agencée pour ouvrir la soupape de reflux (5) de la pompe (4) en fonction d'un signal d'ouverture.

2. Système selon la revendication 1, dans lequel une buse de fluide (8) est munie d'un restricteur de fluide agencé pour limiter le débit de fluide à travers la buse (8).

3. Système selon la revendication 1 ou 2, dans lequel le réservoir de fluide (2) est un réservoir ventilé ayant une pression ambiante.

4. Système selon la revendication 1 ou 2, dans lequel le réservoir de fluide (2) est un réservoir étanche à l'air agencé pour être mis sous pression à partir d'une source de pression externe.

5. Système selon l'une quelconque des revendications 1 à 4, dans lequel la pompe (4) est munie d'un capteur de pression (10) à la sortie de la pompe (4).

6. Système selon l'une quelconque des revendications 1 à 4, dans lequel le réservoir accumulateur de pression (3) est muni d'un capteur de pression interne (11).

7. Véhicule (20), comprenant un système selon l'une quelconque des revendications 1 à 6.

8. Procédé de dispersion d'un fluide sous pression vers un premier type de buse de fluide et un second type de buse de fluide sur un véhicule, où le premier type de buse de fluide est relié à un réservoir accumulateur de pression par l'intermédiaire d'une soupape commandable, et où le second type de buse de fluide est relié au réservoir accumulateur de pression par l'intermédiaire d'une soupape de reflux commandable dans une pompe, comprenant les étapes consistant à :
- alimenter en fluide sous pression le réservoir accumulateur de pression à partir d'un réservoir de fluide avec la pompe,
- ouvrir une soupape commandable pour amener du fluide sous pression au premier type de buse de fluide lorsqu'un premier signal est émis, et
- ouvrir la soupape de reflux de la pompe pour amener du fluide sous pression au second type de buse de fluide lorsqu'un second signal est émis.

9. Procédé selon la revendication 8, dans lequel le premier type de buse de fluide est une buse de pulvérisation pour un capteur.

10. Procédé selon la revendication 9, dans lequel un capteur est un capteur radar, une caméra, un capteur laser, un capteur infrarouge ou un capteur à ultrasons.

11. Procédé selon l'une quelconque des revendications 8 à 10, dans lequel le second type de buse de fluide est une buse de lave-glace.

12. Procédé selon l'une quelconque des revendications 8 à 11, dans lequel le premier signal est émis par un système de commande autonome du véhicule.

13. Procédé selon l'une quelconque des revendications 8 à 12, dans lequel le second signal est émis par un conducteur du véhicule.

14. Programme informatique comprenant des moyens de code de programme pour réaliser toutes les étapes des revendications 8 à 13 lorsque ledit programme est exécuté sur un ordinateur.

15. Produit de programme informatique comprenant des moyens de code de programme stockés sur un support lisible par ordinateur pour réaliser toutes les étapes des revendications 8 à 13 lorsque ledit produit de programme est exécuté sur un ordinateur.
